Europäisches Patentamt

European Patent Office

Office européen des brevets

(19)

(11) Publication number: **0 134 423**
**A2**

# (12) EUROPEAN PATENT APPLICATION

(21) Application number: **84106488.4**

(22) Date of filing: **06.06.84**

(51) Int. Cl.⁴: **G 09 G 1/16**

(30) Priority: **13.06.83 US 504092**
**13.06.83 US 504093**

(43) Date of publication of application:
**20.03.85 Bulletin 85/12**

(84) Designated Contracting States:
**BE CH DE FR GB IT LI NL SE**

(71) Applicant: **Honeywell Information Systems Inc.**
**Honeywell Plaza**
**Minneapolis MN 55440(US)**

(72) Inventor: **Holtey, Thomas O.**
**10, Crehore Dr.**
**Newton, MA 02162(US)**

(72) Inventor: **Goss, Gary J.**
**93, Harris St.**
**Acton, MA 01720(US)**

(72) Inventor: **Murray, Thomas L, Jr.**
**31, Tameron Dr.**
**Hollis, NH 03049(US)**

(72) Inventor: **Siwik, James C.**
**29 Pittsburgh Dr.**
**Nashua, NH 030062(US)**

(74) Representative: **Falcetti, Carlo**
**Servizio Brevetti Honeywell I.S.I.**
**I-20010 Pregnana Milanese(IT)**

(54) Loadable character generator apparatus and related loading method.

(57) A loadable character generator apparatus is disclosed whose operation can be changed to suit various needs such as foreign language requirements, with minimum added hardware.

The apparatus translates the character code of a character to be displayed to the dot pattern for that particular pattern utilizing a screen buffer (7, 8) storing character codes of the characters to be displayed on a screen and a read/write store (14).

A control unit (20) loads the screen buffer with the character codes and a Cathode Ray Tube Controller (3) controls the addressing of both the buffer and the store.

The addition of a controller loading path (13) from the output of buffer (7, 8) to the input of store (14) enable the store (14) to be loaded from the buffer, with any desired dot pattern set, under exclusive control of the cathode ray tube controller.

A related loading method is also described.

./...

FIG. 4

## Loadable character generator apparatus and related loading method.

This invention relates to a loadable character generator apparatus and related loading method that is to an apparatus and method for generating various type of character sets including multiple national language character sets, suitable in computer systems.

In computer systems the character generator is the means for translating from the character code associated with a particular character to be displayed on a cathode ray tube to the dot pattern for that particular character. In order to achieve suitable speeds, character generators are usually implemented in hardware using a table look-up scheme with a table stored in a dedicated memory, usually a ROM/PROM with the character code serving as a portion of the address to the memory. There are various methods for character generation. No prior art search has been made by the applicants. However, in a recent decision by the United States District Court for the District of Delaware regarding litigation of the Cole Patent (U.S. 3,345,458, Master File Docket Number 78-198), the Court opinion provides the following review of the technology.

"In designing a system for receiving digital coded data and displaying it in decoded form on a Cathode Ray Tube (CRT), there are certain parameters that must be considered.
Among these are:
"1. The type of scan pattern. The two types of primary concerns here include one in which the scan covers one character space at a time (a minature raster scan patter), and one in which each line of the scan covers a horizontal slice of each character in a row, as the beam scans across the entire width of a CRT screen (television raster scan pattern).

"2. The type of CRT. The two principle types being the memory tube, which can hold a picture for minutes, and the non-memory type (including those with high persistance phosphers) of which a TV tube is an example, that needs to be 'refreshed' at a sufficient rate to make the picture appear continuous.

"3. Storage. A storage or memory is required in a system employing a non-memory CRT because the video signal must be applied to the CRT a number of times a second. The memory may, however, be either one that stores the character code prior to decoding or one that stores the video bits produced by the translation process. When the former is used, the system is sometimes characterized as an 'on-the-fly' system, to indicate that the video bits are applied to the input of the CRT as each one is generated by the translator in contrast to a system that has storage of the video bits.

"Each type of raster scan pattern has its advantages and disadvantages. An advantage of the minature raster scan over the TV raster scan is that the character code may be presented at a slower rate for the same number of characters per row and rows per screen.

"The two main advantages in using a TV scan are the cost saving in the display portion of the system (the CRT and deflection circuits), and the ability to superimpose characters on pictures or other video (such as maps, etc.). These advantages generally come into play, however, only if one can operate at speeds at least equal to 'commercial' or 'entertainment' TV rates. Then one can buy a mass produced off the shelf display system relatively inexpensively, or simply transmit messages to TV sets that are already being used for other purposes, also mix character signals with other video signals operating at commercial TV rates.

At least the first advantage is lost, however, if the cost of producing character video signals at commercial TV rates exceed the cost saving in the display portion.

"As the beam of CRT scans, the information controlling on/off condition of the beam must be synchronized with the beam scan. This is true whether the beam follows TV scan pattern or a minature scan pattern. If, however, the TV scan pattern is to operate at commercial TV rates, or faster, the requirement of synchronization means that the electronic components must work at rates which were prohibited in the 1950's and too expensive to be commercial through the early 1960's.

"The coded form of input data must be translated to video data to control the on/off condition of the beam of the CRT as it sweeps in a miniraster or TV raster scan. The patent literature from the 1950's discloses translators in the form of digital circuits, for translating from a 6-bitcharacter code to a pulse train which will display a 5 by 7 character matrix on a CRT. These are shown in U.S. Patent Number 2,920,312 by Gordon and Patent Number 2,987,715 by Jones.

"Among the analog translator known in the 1950's was the monoscope character generator. The monoscope generally does not produce a train of 35 equal-length pulse positions, each of which can be on or off, therefore, it is not generally associated with a character matrix type of display. Rather it receives the 6-bit character code and produces a pulse train in which the pulse length correspond to the precise width of the character to be displayed, at various locations along the character height. Phisically, a monoscope is the small CRT, generally cylinderical in shape, which has a target imprinted or stenciled with characters, instead of a screen. The beam is deflected to a particular character on the target, in response to the 6-bit character code received, and it then scans the character. In response to this scan, the monoscope produces an output signal which is the pulse train having pulse lengths or duration corresponding to the time the beam is crossing the character.

This pulse train closely replicates the character shape, and, consequently produces much better quality characters than the pin hole from a 5 by 7 character matrix.

"All of the character display CRT systems of interest here use signal storage, so that the CRT screen can be repeatedly 'refreshed'. Thus, a full screen of character-representing signals (sometimes called a 'page') is stored and used repeatedly to 'refresh' the screen. The storage is eitherof two types.

The first type involves storing the 6-bit character codes that are received. The codes can then be read out from storage, and translated to the video signal, as the CRT beam is scanning. The second type of storage involves translating the 6-bit character codes, as they are received, to their corresponding video signals and then storing the video bits. The video bits can then be read out from storage to the CRT as the CRT beam is scanning While both of these storage approaches involve the storage of codes, and both codes are generally binary in nature and represent characters, they can be conveniently referred to as 'character code storage' and 'video bit storage' respectively.

"The disadvantage of video bit storage is that it takes more storage space, since it must store a screen or page of 35-bit character matrix codes while the character code storage needs only a screen or page of 6-bit character codes The advantage of video bit storage, however, is that the character codes are only translated once, and the video bits are then stored and read out concurrently with a beam scan so that the character codes need not to be translated concurrently with each scan of a scan line and, therefore, the translation need not keep pace with the high-speed beam scan. Further, video-bit storage is particularly suited to the variable placement of the characters on the screen."

As noted supra the advantage of the raster scan technique of generating characters by digital techniques comes into play only if one can operate at speeds at least equal to commercial or entertainment TV rates. This requirement is met in the prior art by utilizing ROM/PROMs to achieve the speed. This technique has the limitation of requiring a dedicated memory for character generation, thus only one character set can be generated and additional character sets including different formats such as elite and pica and also foreign characters require additional hardware in the form of other ROMs/PROMs. This necessitates that the manufacturer store a variety of these pieces of hardware in order to provide full service to customers throughout the world

What is needed, therefore, is a character generator that is loadable rather than fixed (ROM/PROM) so that multiple character sets can be provided with a single hardware configuration.

It is an object of the invention to provide an improved character generator that is loadable rather than fixed (ROM/PROM) so that multiple character sets can be provided with a single hardware configuration.

It is a further object of the invention to provide an improved character generator which utilize a minimum of hardware to make the character generator loadable

It is still a further object of the invention to provide a method by which the character generator is loaded under control of the same circuitry which is normally used to read the character generator and substantially using the same process with the sole difference that the controlled operation is a write one rather than a read one.

It is still a further object of the invention to provide an improved character generator where the attribute for a particular character (i.e. blinking, underlining, etc.) arrive at the screen circuitry precisely at the same time that the character arrives, thus obtaining a clearer image on the screen.

These and other objects of the invention will become obvious upon a reading of the specification together with the drawings.

The soft loadable character generator of the invention replaces the ROM/PROM by a RAM utilizing 2K by 8 RAM memories, a 4K by 8 memory, 4 MUX chips, and a Motorola 6845 CRT Controller with various registers.

Eighty characters horizontally and 12 scan lines vertically are utilized per character row. A character code is read out of the display memory for each character position of each scan line.

Each time a new character is read out of display memory, the character code is used as a portion of the address which is used to address the RAM which serves as the character generator. The remainder of the address for the character generator is taken from the scan line number. The address is comprised of 12 bits with the 8 high order bits comprising the character code and the 4 low order bits comprising the scan line number. As each scan line is scanned across the 80 character positions, an appropriate portion of the character will appear at each character-time until after a total of 12 scan lines are completed, the 80 characters are displayed on the screen.

The manner in which the apparatus of the present invention is constructed and its mode of operation can best be understood in the light of the following detailed description, together with the accompanying drawings, in which:

Figures 1A and 1B are prior art  presentations of the methods of generating characters on a Cathode Ray Tube (CRT) utilizing video signals.

Figure  2 is a prior art block diagram of the method of generating characters on a CRT utilizing digital signals.

Figure  3 is a schematic drawing of the addressing scheme of the invention for generating characters on a CRT utilizing video signals.

Figure  4 is a high level logic block diagram of the invention.

Figure  5 is a detailed logic block diagram of the CRT controller and the MUXs of the invention.

Figure  6 is a detailed logic block diagram of the transceivers to/from the microprocessor, the screen attribute buffer and the screen data buffer of the invention.

Figure  7 is a detailed logic block diagram showing the character generator and various storage registers and shift registers.

Figure  8 shows a typical organization of data in the Screen Buffer RAMs.

Figure  9 shows typical values used for the Starting Address and number of Scan Line parameters for sixteen passes on one row.

In order to understand the instant invention it is necessary to have an understanding of the formation of a picture on the CRT of a television set. The picture is formed by an electron beam  which illuminates various points on the phosphor coating of the screen as it scans the area in which the image is to be displayed.  Normally, the beam scans across one horizontal line at a time, starting at the top of the screen and moving sequentially down the screen to the bottom. This pattern of scan in which the beam proceeds across the entire width of the CRT screen before scanning a second horizontal line is referred to as the television raster scan pattern. By using a digital video control signal to appropriately control the intensity of the beam as it traverses the screen, the beam can be used to form a recognizable message or image. Because of its speed, the beam's movément is not detectable by the eye.

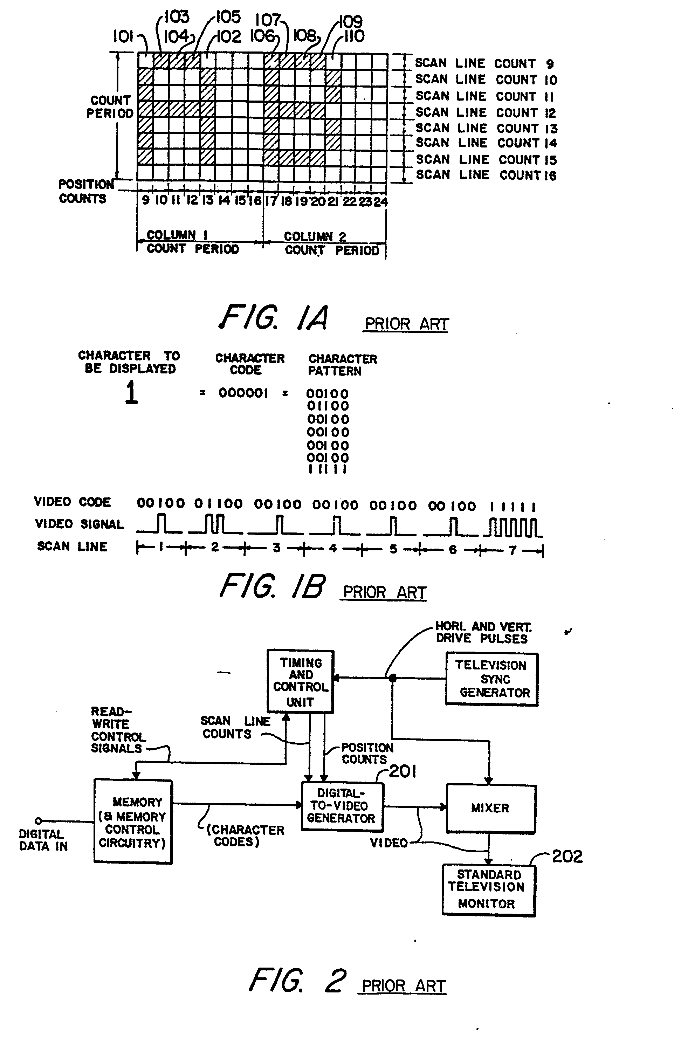

Each character of the set can be represented by an array of dots in a rectangular matrix having fixed dimensions (e.g., 5 dots wide and 7 dots high, or as in the instant invention, 7 dots wide and 9 dots high). The character is displayed on the CRT screen within a character space which includes the dot matrix of the character, and additional blank spaces to separate the characters on the screen (e.g. 9 dots wide by 12 scan lines high). Two such adjacent character spaces are shown in prior art Figure 1A. As the beam moves across the screen in a scan line, the computer codes for each of the characters to be written in a row across the screen are sequentially provided from a memory to a decoder or "character generator". As shown in prior art Figure 2, timing and control circuitry produce count signals which represent the scan line of the raster and the dot position along the scan line. Character-code information, the scan-line count signal, and the dot position count signal are applied to the character generator, label Digital to Video Generator 201, which converts the signals into a 2-level, serial digital output. The output signal is applied to the television monitor circuitry 202 as a video signal. One digital level of the signal corresponds to a dot and turns on the electron beam to write a dot on the television screen. The other digital level corresponds to the absence of a dot, and leaves the electron beam turned off so that no dot is written. Dot thus produced as the electron beam moves along a scan line correspond to the dots in the appropriate horizontal slice of each of the characters to be displayed in the character row. Thus in Figure 1A, dots 103 through 105 (for the character "A") and dots 106 through 109 (for character "B") will be illuminated sequentially as the electron beam moves along the top scan line. The timing and control circuitry of Figure 2 also provides horizontal and vertical drive pulses to the monitor 202 to synchronize the scanning motion of the beam with the video signal generated as described supra.

After completing one scan line, the electron beam flies back to the starting side of the screen, (but down one position due to the vertical sweep) to start the next scan line. The sequential application of character codes, scan line count and dot position count is then repeated, this time generating the video signals for the next dot slice of each of the characters in the row.

After the appropriate number of scan lines (e.g., 8 or 12) have been "written" onto the screen, a full row of characters is complete. The entire row has been written onto the screen, one scan line at a time, from top to bottom.

In a like manner, the additional rows of characters making up the message to be displayed on the screen are written. After the entire screen has been scanned, the procedure is repeated at a rate of 50 or 60 times per second (depending on country) so as to "refresh" the screen and create a display which the human eye perceives as the persistent, non-flinckering image.

Referring to Figure 1B, there is an example of the translation of the code for the character "1" which is to be displayed on the screen. It should be noted that if the binary codes that are used for identifying the various characters were supplied directly to the CRT, the pattern on the screen would not generally be recognizable. Thus, the 6-bit code 000111 might represent a number "7", but would appear as 3 dark spots followed by 3 bright spots, or vice versa. Consequently it is necessary to translate the 6-bit binary code into a video signal which will represent a normal appearing character. To see how this is done refer to Figure 1B which shows the code to pattern translation for the number "1" It should be noted that the video code for the first scan line is 00100 and the video signal which represents this code is a pulse in the position where the dot is to appear. Similarily, for scan line two the video code is 01100 whereby a video signal representing this video code is two pulses causing two dots to appear on scan line two. (When the final scan line is completed, the number "1" appears on the screen).

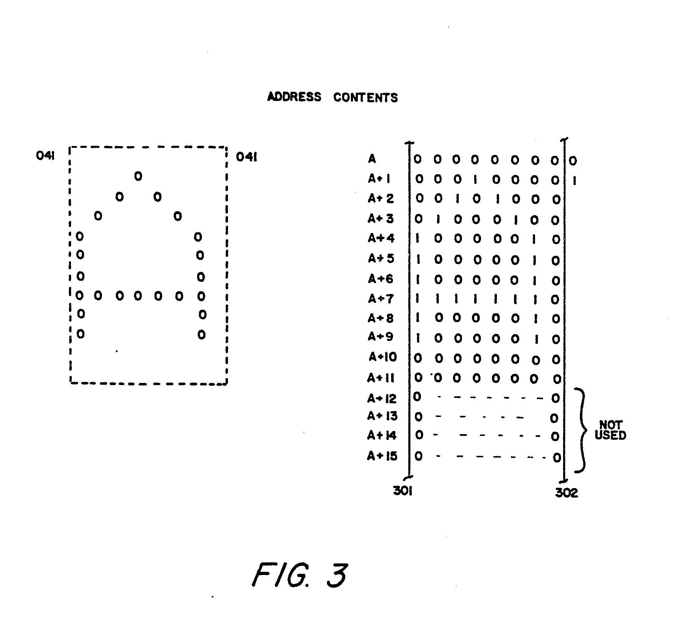

Referring now to Figure 3, there is shown one character on one row in one column. There are 80 such character columns across the screen, and there are 25 character rows; thus 2000 characters can be generated on the page or screen. Figure 3 shows how the letter "A" would be formed within the boundaries 301 to 302 when the total of 12 raster rows comprising one character row have been completed. (It should be noted that 9 raster lines are utilized in character generation; whereas 3 are added as a space between character lines.)

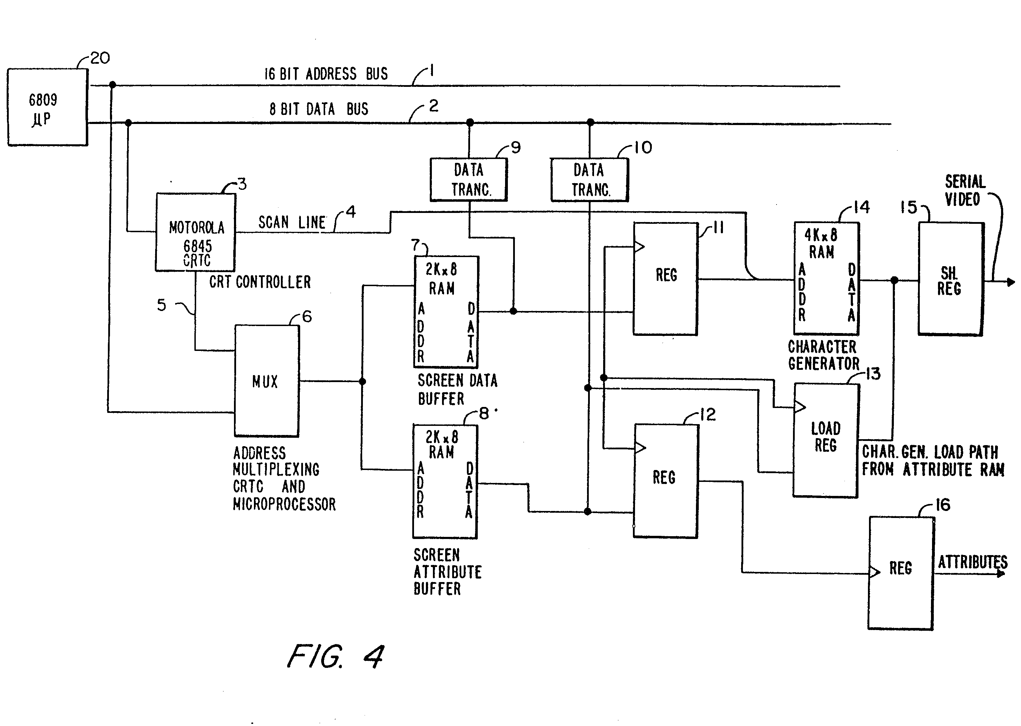

In order to obtain this character (which may be part of a message), it first must be stored in a memory or buffer 7 shown on Figure 4. In order to write this character on the screen, it must be generated by the character generator 14. The character generator stores different standard characters at different addresses which can be used to generate the characters of any message on the screen which is stored in buffer 7 as previously described. The pattern stored in the character generator 14 is addressed by utilizing the code of the character in the message as part of the address. In this case the hexadecimal code for "A" is 041, while the decimal code is 65. The address of the letter "A", therefore, would be 65x16 for the first raster line, and for the second it would be (65x16)+1, etc. As each raster line progresses across the screen, the patterns for different characters of the message are similarly addressed by their codes and a portion of each is generated until one full character row is generated by 9 successive raster lines.

Referring now to Figure 4, there is shown a high level logic block diagram of the invention. Two busses, a 16-bit address bus 1 and an 8-bit data bus 2, are coupled to commercially available Motorola 6809 microprocessor 20. Under control of the microprocessor 20, a Central processing unit (not shown) communicates to the terminal, of which the invention is a portion, via the address and data busses 1, 2. Two commercially available 6116 RAMs 7 and 8 respectively are coupled to the 8-bit data bus 2 via commercially available 74LS245 transceivers 9 and 10. The transceivers 9 and 10 can transmit data in either direction from the bus to the RAM or from the RAM to the bus. The data is placed into the RAM 7 or 8 at addresses controlled by the microprocessor 20 via address bus 1. Selection of the RAM 7 or 8 in which data or attributes is to be stored is done via the low order bit of address bus 1 through logic not shown. Accordingly, when a message is to be written on the CRT screen (not shown), data (i.e. the message) is written into the RAM 7 via transceiver 9 at addresses provided by the microprocessor 20. In a similar manner, attributes (i.e. underlining, blinking, etc.) are written via data transceiver 10 into RAM 8. In order to write on the CRT screen (not shown), it must be done piecemeal for each character as each scan line progresses across the screen (not shown), as previously described supra. Subsequently, under control of the CRT 3, each character of the message is addressed and read out into register 11. Similarly, each attribute corresponding to any given character is simultaneously read out into register 12. For any charcter of a message temporarily stored in register 11, a full address comprised of 8 high-order bits (which in reality represent the character code) and 4 low-order bits (which represent the scan lines, and which count 12 different scan lines 0-11) is presented to character generator 14. Character generator 14 is comprised of two commercially available 6116 RAMs which stores a set of character patterns of any distinctive type which can be addressed by the address formed by concatenating the character code with a scan line code as described above. As each separate scan line of a CRT screen (not shown) progresses through 80 character time-frames a portion of each character is written in each time-frame on each scan line as indicated at each time frame by the character temporarily stored in register 11 for that particular time-frame. The scan line address will cycle from 0 to 11, and when 12 complete scan lines have been made on the screen, then 80 characters would be completed on the screen as one row. The shift register 15 coupled to the character generator 14 are the means for converting parallel data to serial data.

One feature of the invention is to have the attribute for a particular character arrives at the screen (not shown) at precisely the same time that the character arrives. This is accomplished by storing the character data in the screen data buffer and the attribute data in the screen attribute buffer. As each address is presented to the screen data buffer and the screen attribute buffer, the character being addressed is placed in register 11 and the attribute being addressed is placed in register 12. Thus the character code and the attribute code are available to the control logic to be written on the screen at the same time. Thus, since both the character information and attribute information is available at precisely the same time, it makes for very precise timing and a clear image on the screen.

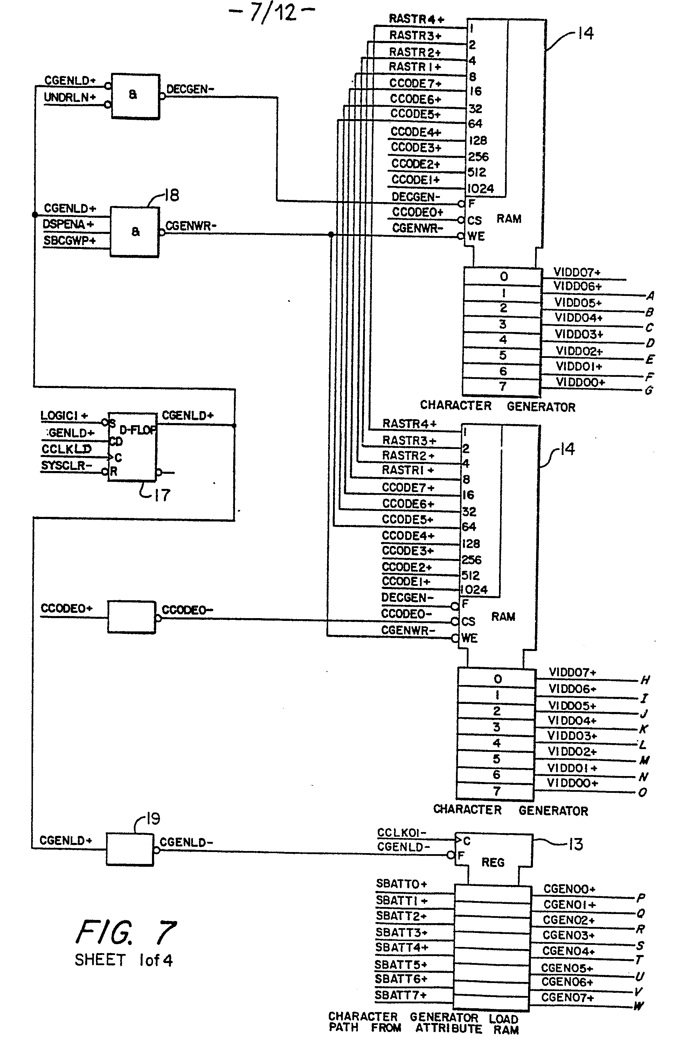

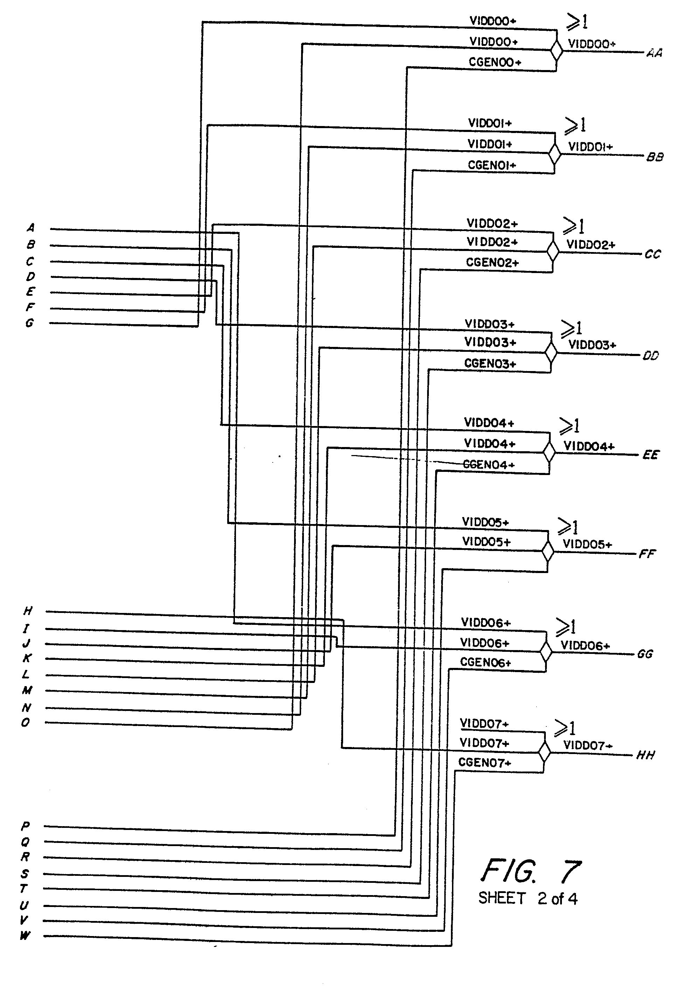

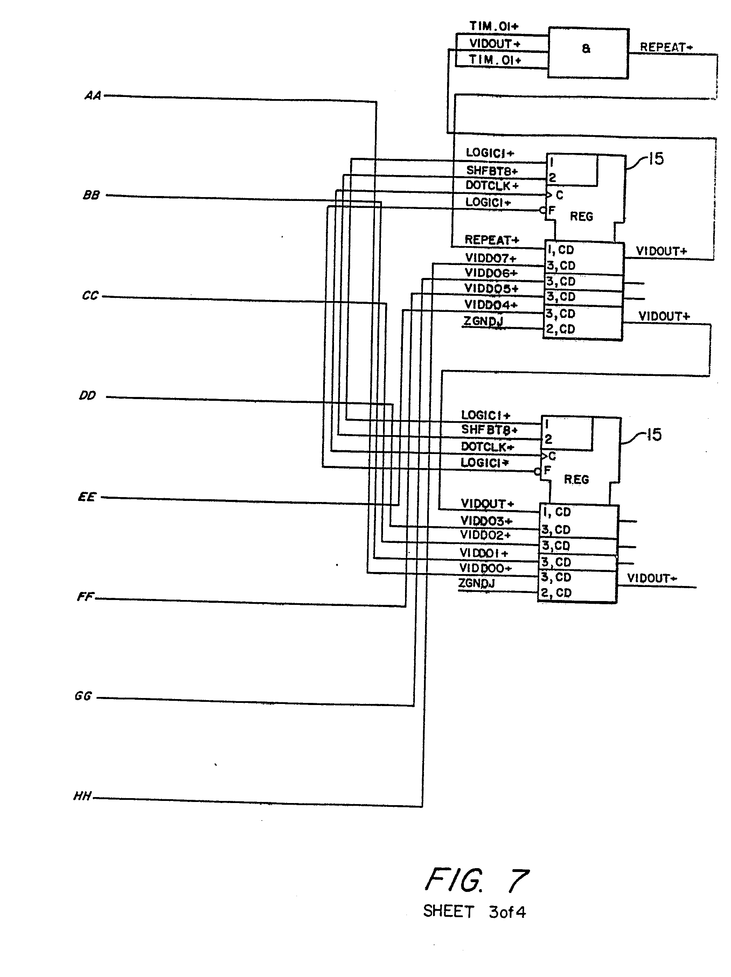

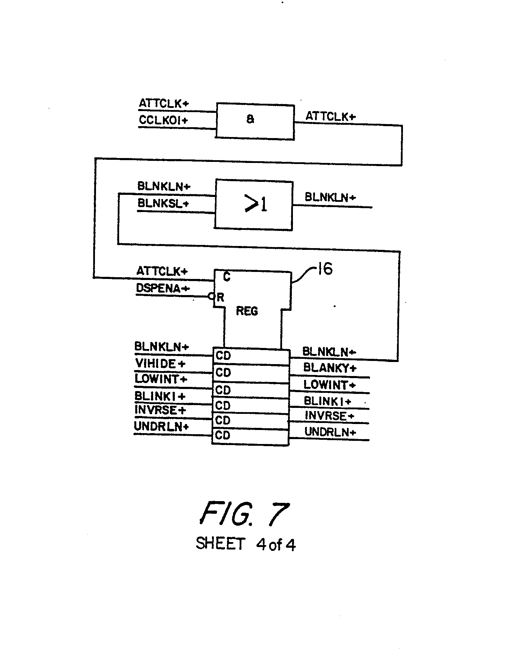

It will now be shown that the invention provides a means of loading the character generator RAM 14 of Figure 4 which requires the minimum of additional hardware over that required for the character generation function. The heart of the invention consists of adding the single register 13 of Figure 4 to provide a path for the data to be written into the character generator 14, together with a Character-Generator-Load mode flip-flop 17 and associated control element 18 of Figure 7. When this flip-flop is set to the Character-Generator-Load state, the Character Generator RAM is set to Write mode and the tristate output of register 13 described above is enabled so that the contents of the register 13 are written into RAM 14 on every character clock cycle so long as this mode remains in effect. Now the address at which the data are written is the twelve-lead address consisting of the 4 scan line leads emanating from the CRTC 3 and the 8 leads emanating from the register 11 just as when the RAM 14 is used for its normal character generation function. Also note that register 11 is fed by the screen "data" buffer RAM 7 while the register 13 which contains the data to be written is fed by the screen "attribute" buffer RAM 8.

In other words, the mentioned architecture leads to a loading method by which the character generator 14 is loaded by using as data to be registered the content of the screen attribute buffer 8, and as a portion of the address where to write, the content of the screen data buffer 7. Therefore loading of character generator 14 may be performed with the same program routine which is used to read the character generator 14 for display purpose, the only difference being that the controlled operation are write ones not read ones and that certain program parameters are different.

On the other hand, loading of screen data buffer 7 and screen attribute buffer 8 with information required to load the character generator 14, may be performed with the same programs which are normally used to load the two buffers for the purpose of providing the information display on the screen, under control of the same microprocessing unit 20.

A combination of a "load" of the screen data and attribute RAMs and a programming of the CRTC 3 in conjunction with the Load-Mode hardware described above will cause the desired table to be loaded into the character generator 14. The "attribute" screen buffer is loaded with the screen patterns and the "data" screen buffer is loaded with the character codes normally used to evoke the associated patterns. These patterns are 12 scan lines in height in the present instance, but, in order to simplify the addressing of the character genrator RAM 14, the patterns are allocated to blocks of 16 sequential locations. This allows for an implementation where the address is simply the concatenation of the character code with scan line number. Since the screen buffer data and attribute RAMs contain 2048 (2K) locations, there is room for 2048/16=128 patterns in one "load" of the attribute RAM. This is one half of the 256 different patterns which are desired to be loaded into the character generator so that the procedure must be split into two phases. Typically, the split will be according to the character code set with 128 codes being loaded in the first phase and the remaining 128 codes being loaded in the second phase. The following description will be directed to the operation of one of these phases, the only distinction between the two phases being in the values of the data which are loaded into the data and attribute RAMs 7 and 8.

At the beginning of each phase, the screen attribute and data buffers are respectively loaded with 128 patterns and the corresponding character codes, the codes being replicated 16 times over. The details of the ordering of these information within the screen buffer RAMs are governed by the operation of the CRTC 3.

The CRTC 3 is capable of being loaded with certain parameters whhich will then control its operation, including the following:

Number of characters per row

Number of scan lines per character row

Number of character rows

Screen buffer starting address

One purpose of the CRTC is to generate the proper sequence of addresses to address the screen buffer 7 and 8 and to allow for the display of the patterns associated with the codes stored in the buffer while also generating scan line numbers to serve as part of the character generator address as explained earlier. Another purpose of thr CRTC is to afford ease of scrolling by allowing the beginning of screen to correspond to an arbitrary location in the screen buffer, hence the Starting Address parameter.

The operation of the CRTC consists of emitting a sequence of screen buffer addresses and scan line numbers (as well as synchronizing pulses not covered here). In particular,the initial sequence emitted consists of a linear sequence of screen buffer addresses commencing with the screen buffer Starting Address, the length of the sequence being equal to the "Number of Characters per Row" parameter, while holding the emitted scan line number at ZERO. After a suitable synchronization interval, this identical sequence of screen buffer addresses is repeated while holding the emitted scan line number at a value of ONE. This process is repeated for the number of times specified by the "Number of Scan Lines per Character Row" parameter. Following this, the entire process is then repeated with the next sequential set of screen buffer addresses, this level of iteration being repeated until the number of repetitions is equal to the "Number of Character Rows" parameter.

Thus for a display of 80 characters per row with 12 scan lines per character row and 25 character rows, the initial sequence would consist of the first 80 addresses (commencing with the Screen Buffer Starting Address) with the scan line number held equal to ZERO followed by a sequence consisting of these same first 80 addresses with the scan line number held equal to ONE, etc. until the scan line number equals 11. Following this, the second 80 addresses are generated 12 times over etc., until lastly the 25th set of 80 addresses are generated twelve times over (with the scan line number ranging from 0-11 with each repetition of the same set of addresses).

With this knowledge of the inherent capability of the CRTC in mind, we choose to program the CRTC in the following "artificial" configuration for the purpose of loading the character generator.

Number of characters per row = 128

Number of character rows = 1

Number of scan lines per character row = variable

Screen Buffer Starting Addresses = variable

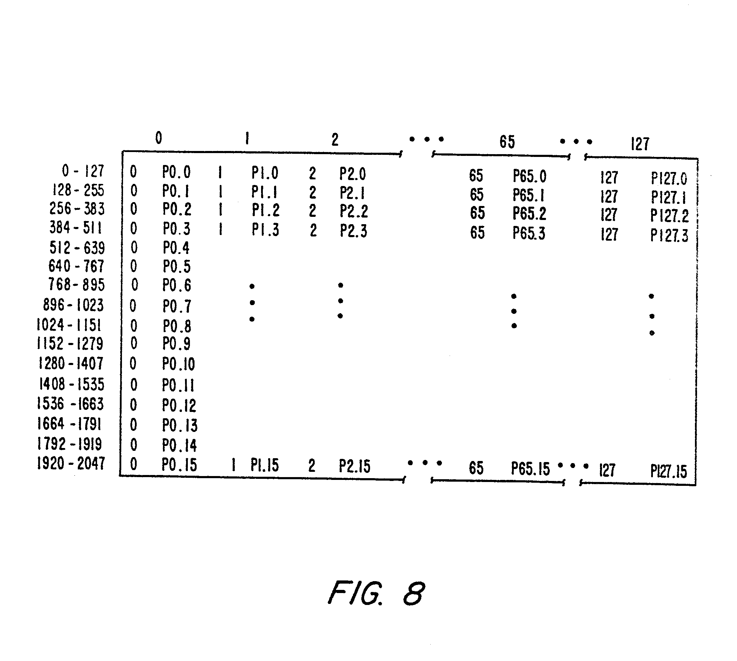

Figure 8 shows the organization of data in the Screen Buffer RAMs 7 and 8. The left half of each column represents the contents of the "data" buffer 7, while the right half represents the contents of the "attribute" buffer 8. The numbers across the top are the decimal address of the first 128 locations (those in the first erow) while the numbers along the left side show the range of addresses encompassed in each of the rows. The case shown in Figure 8 is for the first phase; i.e., for character codes 0-127 and as can be seen, the contents of the "data" buffer (the left half of each column) is simply this range of numbers in sequence and replicated 16 times over. The notation "Pa.b" (where "a" and "b" are numbers) shown for the contents of the right columns refers to the numeric value for scan line "b" of the pattern for the character whose code is "a". To clarify this, let us use the example of Figure 3. If the character code for "A" is 65 (which it is in ASCII), then we see that P65.0=0, P65.1=16 (00010000 Binary), P65.2=40 (00101000 Binary), etc.

The appropriate character patterns, organized as described are loaded into the attribute screen buffer by a suitable program residing in the 6809    P 20 at the start of each phase.

The program may be the same which is normally used to load the screen buffer with a message to be written on the CRT screen via transceiver 9 at   addresses provided by the microprocessor 20 through multiplexor 6.

It is esential to note that writing or loading of screen buffer 7 as well as attribute screen buffer 8 is always controlled   by microprocessor 20, whilst the display operation is controlled by CRTC reading of RAMs 7, 8 and RAM 14

We will now describe the operation of the loading algorithm for RAM 14. Due to constraints imposed by the normal functioning of the CRTC, the algorithm for one phase of loading character patterns into the character generator must be divided into 16 passes. For each pass, the CRTC is loaded with parameter as described below, then the character generator is placed in the Load Mode until the entire CRTC sequence has been emitted. (This is determined by monitoring by means not shown the Vertical Sync signal emitted by the CRTC at the end of each complete sequence that it generates.)

Thus, there will described the loading of patterns with the full range of 16 scan lines recognizing that improvement in loading time would be achieved by only loading those scan lines actually used for the display.

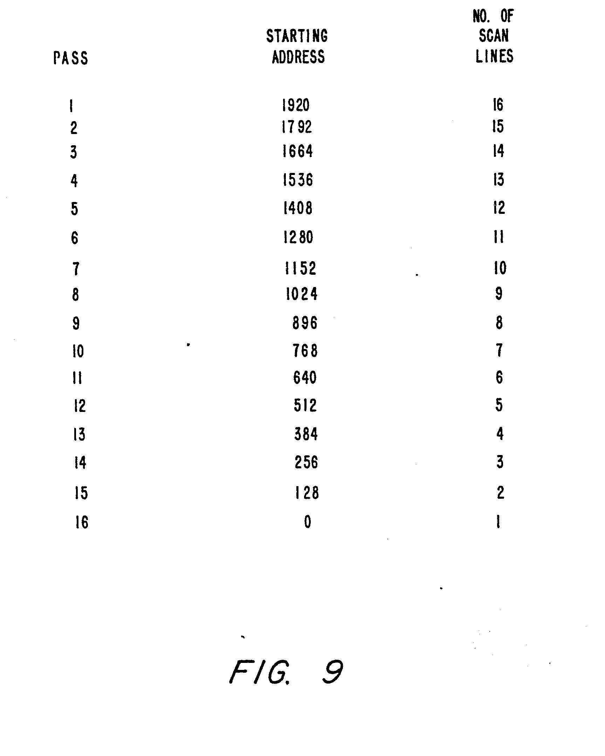

Figure 9 shows the values of the screen buffer Starting Address and Number of Scan lines per character row parameters for each of the sixteen passes.

On the first pass, the Starting Address is set to the address corresponding to the beginning of the last scan line of Figure 8, this being the area where the scan line 15 slices of the character patterns are stored. The CRTC will sequence through this row of addresses sixteen times overwhile stepping the scan line number from 0 to 15. Now, since the screen data buffer 7 contains the sequence 0-127 and since each of these numbers together with the scan line number, forms the address to the Character Generator RAM 14, the binary representation of scan line 15 patterns (the right halves of each column of the last row of Figure 8) will ·be written sixteen times into the Character Generator 14. The first fifteen of these iterations are not desired, but this sixteenth does load the pattern information of scan line 15 into the proper locations. In the second pass, the Starting Address is set to 1792 (the next to last scan line of Figure 8) but this time the number of scan lines is programmed for 15. This means that on this pass the scan line numbers generated by the CRTC will only range from 0 to 14 so that the pattern information of scan line 15 which was loaded in the first pass will remain intact. Again, on this pass, only the last of the iterations (fifteen this time) through the 128 specified addresses in the screen buffer is required. Thus the process proceeds, moving up one scan line of Figure 8 each time, while decreasing the Number of Scan Lines parameter by one until on the last (sixteenth) pass there is only one sequencing through the first 128 locations. At this point, the half of the character generator appropriate to the current phase is fully loaded.

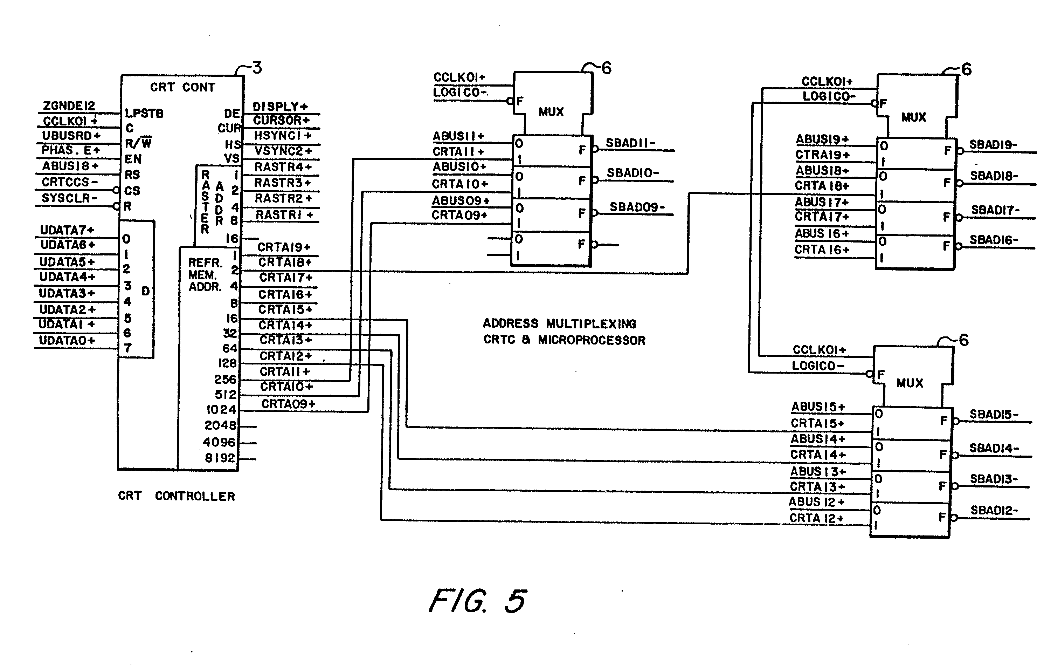

Referring to Figures 5, 6 and 7, there are shown detailed logic block diagrams of the invention of Figure 4. It should be noted that elements on Figures 5, 6 or 7 that correspond to similar elements on Figures 4 have been identified by the same reference numeral. Thus, the character generator of Figure 4, having reference numeral 14, is also identified by reference numeral 14 on Figure 7.

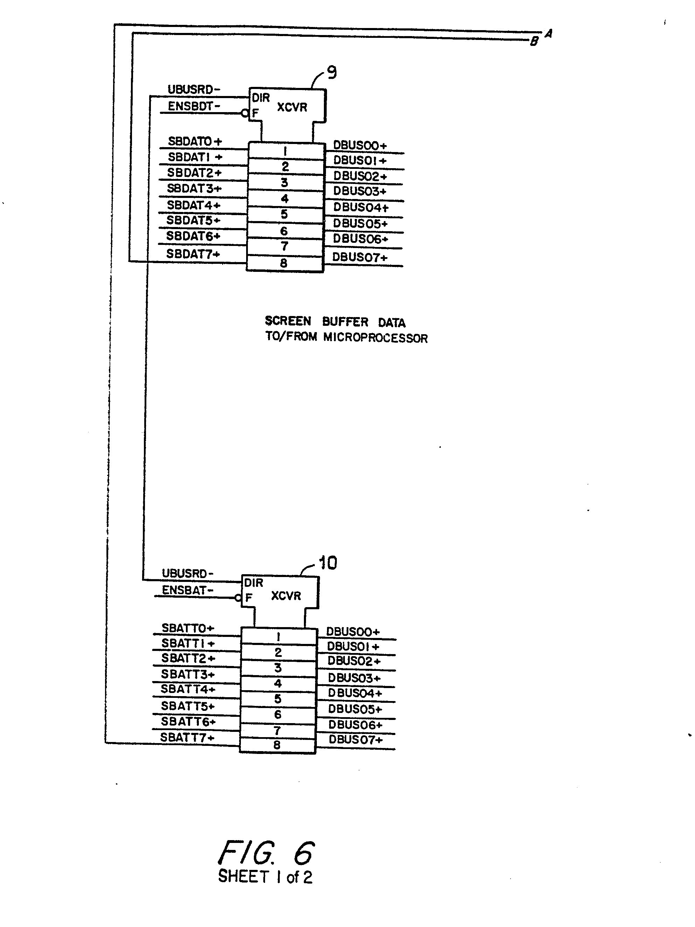

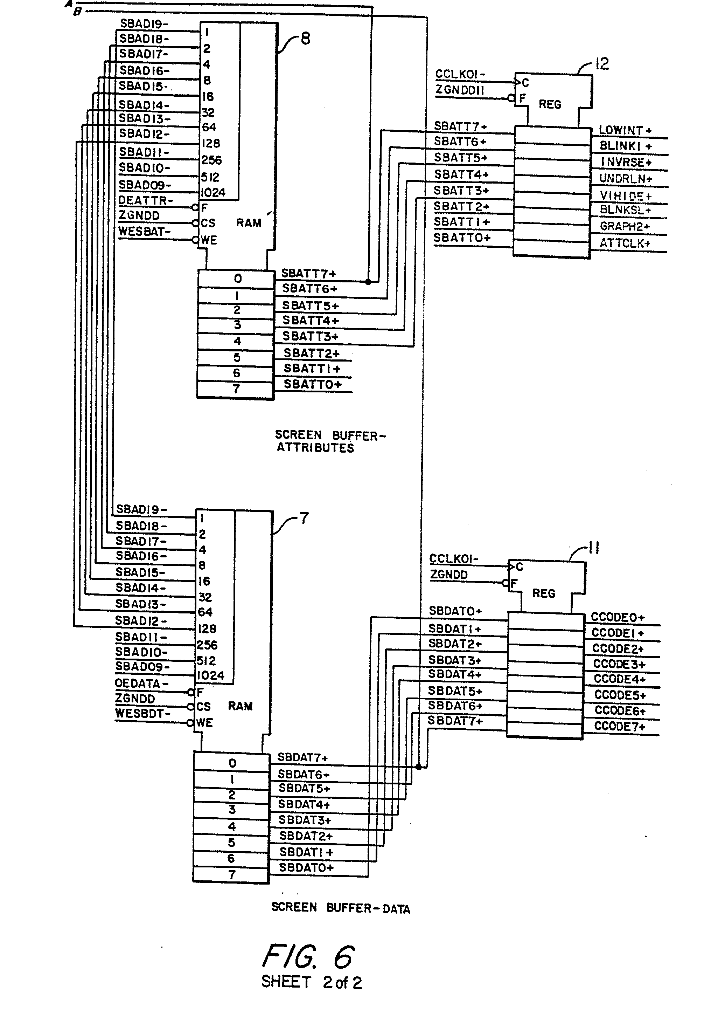

Referring now to Figure 6, screen data buffer 7 and screen attribute buffer 8 coupled together comprise a 2Kx16 screen buffer. Data from the 8-bit data bus 2, shown on Figure 4, is applied to data bus leads DBUS00 through DBUS07 of both transceivers 9 and 10. Screen buffer data signals SBDAT0-SBDAT7 on transceiver 9 are applied to the SBDAT0-SBDAT7 terminals of screen data buffer 7 when data is being transmitted from the bus to be written into the screen data buffer 7. In a reverse manner, data from screen data buffer 7 can be read out onto bus 2 via transceiver 9. In a similar manner, data representing attributes, can be written or read out of the screen attribute buffer 8, and to or from the bus 2 via the data bus terminals DBUS00 through DBUS07 and screen buffer attribute terminals SBATT0 through SBATT7 of transceiver 10. Transceivers 9, 10 are controlled in flow direction by signals ENSBDT, ENSBAT, UBUSRD issued by microprocessor 20. In transferring information into or out of the screen buffer memories 7 and 8, it is transmitted to or from locations addressed by signals on terminals SBAD09 through SBAD19. Additionally, when writing buffer memories 7 and 8 the write enable signal WESBAT or WESBDT of screen buffer attribute 8 or screen data buffer 7 must be true. WESBAT or WESBDT are issued by MP 20. This technique of using unique write enable signals to select one or the other memory permits the screen data to be stored in one memory bank; whereas the screen attributes are stored in another memory bank.

When it is desired to generate a character, the information in screen data buffers 7 and 8 is read out into register 11 and 12 in synchronism with the scan line time intervals at times imposed by clock signal CCLK01. It will be seen, therefore, that screen buffer data on terminals SBDAT0 through SBDAT7 will be applied to the SBDAT0 - SBDAT7 terminals of register 11. In a similar manner, data from screen attribute buffer 8 is applied to register 12 and provides in output signals such as BLINKI, LOWINT, UNDRLN, etc. The information in register 11, for example, is the character code required for that particular time interval. This character code is applied to the CCODE0 through CCODE7 terminals of the character generator 14. (sheet 1 of Figure 7). Additionally the raster scan line address signals on terminals RASTR1 through RASTR4 of CRT controller 3 are applied to the character generator 14 on raster scan address line terminals RASTR1 through RASTR4 of character generator 14. Accordingly as raster scan line 0-11 are addressed, and as each character is presented to the character generator in synchronism with the scan line time intervals, the character generator 14 decodes a portion of the character and provides video output signals to terminals VIDDO0 through VIDDO7 of shift registers 15 on sheet 3 of Figure 7 via lines VIDDO0 - VIDDO7 of sheet 2 of Figure 7. In sheet 2 of Figure 7 the shown rhombi indicates connection nodes. These signals are input in parallel to shift register 15 and are shifted out serially on terminal VIDOUT under control of DOTCLK. Signals LOGICI, ZGNDJ, SHFBT8, appearing in sheet 3 of Figure 7 and permanently applied, control the shift mode, (up-down) and load mode (serial parallel). Signal REPEAT is of no interest for the purpose of the invention.

Referring now to Figure 5, the CRT Controller (CRTC)3 generates all of the timing for the display. This consists of the screen buffer address sequence emitted on terminals CRTA09-CRTA19, the raster scan line number sequence emitted on terminals RASTR1-RASTR4, as well as the horizontal and vertical synchronizing signals HSYNC1 and VSYNC2 and the display enable signal DISPLY. The CRTC 3 is capable of being loaded with control parameters by virtue of having the signals UDATA0-UDATA7 from data bus 2 applied to its data terminals and suitable control signals being applied by microprocessor 20, such as UBUSRD, PHAS.E, ABUS18 and CRTCCS. The Motorola "Microprocessor data manual" 1982 provides at pages 4-479 a detailed description of the CRT controller and its operation.

Signal ZGNDE 12, SYSCLR and CCLK01 are conventional ground, reset and timing signals received by the controller.

CURSOR signal issued by the controller is used to validate cursor addresses and is of no interest here.

The multiplexors (MUX) 6 are for the purpose of selecting an address for the screen buffer RAMs, from either the CRTC 3 or from the address bus 1. The former case is selected during a portion of every display character time (as controlled by clock CCLK01) to allow for reading out of the coded display data and attributes; while the latter case is selected under control of the microprocessor 20 for the purpose of causing the information to be displayed to be properly stored in the screen buffer.

The specifications for elements other than the CRTC are to be found in the Texas Instrument TTL Data Book for Design Engineers, Second Edition).

Some additional consideration is deserved by sheet 1 of Figure 7 where load mode flip-flop 17 is shown.

Flip-flop 17 of D type is set by command GENLD issued by microprocessor 20 on the occurrence of a particular clock signal CCLKLD (which could be CCLK01 as well, enabled by a suitable other signal) and when set produces signal CGENLD. CGENLD enables, through NAND 18 the writing into RAM 14.

DSPENA and SBCGWP are further control signals which enable writing if further condition are met, for instance the CRT displat must be disabled from operation.

CGENLD further enables, (through NOT 12) register 13 to output the stored information.

DECGEN is a signal which must be at level 0 to enable the output of RAM 14 in read operations. Write operations are not affected by the level of such signal.

Having described the invention so that a person of ordinary skill in the art can make and use it without undue experimentation, those skilled in the art will realize that many variations and modifications can be made to produce the described invention and still be within the spirit and scope of the claimed invention. Thus, some of the hardware and/or steps may be altered or replaced by different hardware and/or steps which will provide the same result and fall within the spirit of the claimed invention.

For instance, rather than using register 13 as a load path for loading the character generator from the screen attribute RAM it would be possible to connect the outputs of register 12 to the input/output of the character generator through a set of control gates, the latching function of register 13 being in such a case performed by register 12.

Additionally the control flip-flop 17 which has been shown as an individual element, may be a cell of a status register, latching several status conditions of the loadable character generatus apparatus of the invention, and among them the condition "load mode".

Further the use of a microprocessor such as the Motorola MC68000 having 16 bit data bus, instead of the 6809 microprocessor, shown in Figure 4, leads to the possibility of simultaneous parallel loading of screen data buffer 7 and screen attribute buffer 8 so that the two buffers may actually form a single screen buffer having a 16 bit parallelism which may provide at the same time both address and data to be loaded information to character generator 14.

Claims

1) A loadable character generator apparatus which receives binary digital character codes and provides sets of binary pattern codes each defining a slice of a digital image pattern for generation and display of alphanumeric characters, each different image pattern corresponding to each different character code, including an addressable and writeable store (14) for holding a plurality of said pattern codes, an addressable buffer (7, 8) for holding the character codes whose character images are to be displayed, control means (3) for the sequential, repeatitive addressing of said buffer, a control unit (20, 6) for loading said buffer with binary codes, including character codes, said addressable store being addressed by a binary code received partially from said control means (3) and partially from said buffer (7, 8), characterized by that it comprises further:
- path means 13 coupled to said buffer and to said addressable store for providing a path for writing in said addressable store data hold in said buffer, and
- control means (17, 18, 19) coupled to said addressable store and to said path means (13) for enabling the loading of said addressable store, through said path means with data hold in said buffer.

2) A loadable character generator apparatus as claimed in claim 1, wherein said path means comprises a register (13) having inputs connected to data outputs of said buffer (8) and outputs connected to data input of said store (14)

3) A loadable character generator apparatus as claimed in claim 1 wherein said addressable buffer is comprised of two independently addressable and writeable buffers; a data buffer (7) and an attribute buffer (8) the two buffers being simultaneously addressable and concurrently readable or independently addressable and writeable at different times.

4) A method for loading a loadable character generator apparatus which receives binary digital character codes and provides sets of binary pattern codes, each defining a slice of a digital image pattern for generation and display of alfanumeric charcters, each different image pattern corresponding to each different character code, the apparatus including an addressable and writeable store (14) for holding a plurality of said pattern codes, an addressable buffer (7, 8) for holding the character codes whose character images are to be displayed, control means (3) for the sequential repeatitive addressing of said buffer, a control unit (20, 6) for loading said buffer with binary codes including character codes, said store (14) being addressed by a binary code received partially from said control means (3) and partially from said buffer (7, 8), characterized by the following steps:

- Loading said buffer, under control of said control unit (20, 6) with character codes and sets of pattern codes, each pattern code in a set and the related character code being loaded at same buffer address location,

- Reading out from said buffer, under control of said control means (3) said pattern codes, one at a time, together with the related character code and

- writing said store (14) at addresses jointly defined by each of the character codes read out from said buffers and by a binary code provided by said control means (3) with the pattern code concurrently read out with each of said character codes.

5) The method of claim 4, wherein said buffer having a capacity of n addressable locations, said buffer is loaded at any location having address

$A = a + (N/n) \cdot b$

with the pair of information   a   and   Pa,b where   a   is a variable character code n   is the number of slices or pattern codes of each image pattern related to the same character code

$a \leq b < n$   is a variable scan line (or slice) number and Pa,b   is the pattern code of character code "a" which pattern code corresponds to scan line number "b"

6) The method of claim 4 wherein said store (14) is loaded at generic binary address AS with the information Pa,b said address AS comprising a lower weight binary portion equal to "a" and and higher weight binary portion equal to "b", the loading occurring with subsequent iterations of addresses provided by said control means where the iteration range of portion "b" at each subsequent iteration decreases by 1 ($0 \leq b < n$, $0 \leq b < n-1$, ......b=0)

7) Loadable character generator apparatus for a data processing system in which data is processed in the form of binary digital character codes and in which data is displayed in the form of character images generated from binary digital image patterns, each different image pattern corresponding to each different character code, said apparatus including an addressable store (14) for holding a plurality of said image patterns and, when said system is operating in a display mode, applying to said store the addresses of the character images to be displayed, whereby the image patterns so addressed are read out of said store for use by a display unit; said apparatus further including an addressable first buffer (7) for holding the character codes whose character images are to be displayed and an addressable second buffer (8) for holding attribute codes for the images to be displayed, and wherein in the display mode addresses are supplied effectively concurrently to said first and second buffers to cause the readout of the addressed character codes and corresponding attribute codes, each character code upon being so read out from said first buffer being applied as an address element to said addressable store, whereby the image pattern so addressed by said read out character code and the concurrently read out attribute code are made available for effective simultaneous use by the display unit;

characterized by that it comprises further:

a controllable path (13) between said second buffer (8) and said addressable store (14) to enable transferring the contents of said second buffer to said addressable store;

means (6, 9) for loading into said second buffer (8) a plurality of image patterns of a particular font;

means (6, 10) for loading character codes into said first buffer (7), said character codes being stored at locations in said first buffer whose addresses are the same as the addresses of corresponding image patterns held in said second buffer;

means (3, 6) for applying concurrently a succession of addresses to said first and second buffers to enable the concurrent read out therefrom of the stored character codes and image patterns; and

means (17) for enabling said controllable path to provide for the storage of each image pattern readout from said second buffer into said addressable store at locations whose address is provided by the character code simultaneously readout from said first buffer.

8) Loadable character generator apparatus of claim 7, wherein the improvement further comprises:
means (20) for selectively controlling said system to operate in said display mode or in image pattern load mode, wherein in said image pattern load mode said means for applying said succession of addresses and said means for enabling said controllable path are enabled for operation.

9) Loadable character generator apparatus of claim 7, wherein when said character codes are held in said first buffer (7) at the same time said image patterns are held in said second buffer (8), the storage configuration of said character codes and image patterns in the joint storage member composed of said first and second buffers may be represented by the following table:

| Range of addresses per row | 0 | | 1 | | 2 | | ... | 127 | |
|---|---|---|---|---|---|---|---|---|---|
| 0 – 127 | 0 | P0.0 | 1 | P1.0 | 2 | P2.0 | ... | 127 | P127.0 |
| 128 – 255 | 0 | P0.1 | 1 | P1.1 | 2 | P2.1 | | 127 | P127.1 |
| 256 – 383 | 0 | P0.2 | 1 | P1.2 | 2 | P2.2 | | 127 | P127.2 |
| 384 – 511 | 0 | P0.3 | 1 | P1.3 | 2 | P2.3 | | 127 | P127.3 |
| 512 – 639 | 0 | P0.4 | | | | | | | |
| 640 – 767 | 0 | P0.5 | | | | | | | |
| 768 – 895 | 0 | P0.6 | etc. | etc. | etc. | etc. | | | |
| 896 – 1023 | 0 | P0.7 | | | | | | | |
| 1024 – 1151 | 0 | P0.8 | | | | | | | |
| 1152 – 1279 | 0 | P0.9 | | | | | | | |
| 1280 – 1407 | 0 | P0.10 | | | | | | | |

```
1408 - 1535      O  PO.11
1536 - 1663      O  PO.12
1664 - 1791      O  PO.13
1791 - 1919      O  PO.14
1920 - 2047      O  PO.15      1  P1.15      2  P2.15   ...   127 P127.15
```

wherein the left margin represents the range of addresses of the locations in said first and second buffers which hold the character codes and image patter. slices of the corresponding scan line (row) in the table, the number at the top of each column pair represent the character code number of the image patterns held in the second buffer, the left-half of each column pair represents the character code numbers held in the addressed locations in the first buffer, and the right-half of each column pair represents the binary representations of the image pattern slice of the corresponding scan line in the table; the notation "Pa.b" denoting the stored binary representation for scan line "b" of the image pattern whose corresponding character code is "a".

**FIG. 1A**  PRIOR ART

CHARACTER TO BE DISPLAYED    CHARACTER CODE    CHARACTER PATTERN

1 = 000001 = 00100
01100
00100
00100
00100
00100
11111

VIDEO CODE   00100   01100   00100   00100   00100   00100   11111

VIDEO SIGNAL

SCAN LINE   1   2   3   4   5   6   7

**FIG. 1B**  PRIOR ART

**FIG. 2**  PRIOR ART

ADDRESS    CONTENTS

| | | | | | | | | | | |
|---|---|---|---|---|---|---|---|---|---|---|
| A | 0 | 0 | 0 | 0 | 0 | 0 | 0 | 0 | 0 |
| A+1 | 0 | 0 | 0 | 1 | 0 | 0 | 0 | 0 | 1 |
| A+2 | 0 | 0 | 1 | 0 | 1 | 0 | 0 | 0 | |
| A+3 | 0 | 1 | 0 | 0 | 0 | 1 | 0 | 0 | |
| A+4 | 1 | 0 | 0 | 0 | 0 | 0 | 1 | 0 | |
| A+5 | 1 | 0 | 0 | 0 | 0 | 0 | 1 | 0 | |
| A+6 | 1 | 0 | 0 | 0 | 0 | 0 | 1 | 0 | |
| A+7 | 1 | 1 | 1 | 1 | 1 | 1 | 1 | 0 | |
| A+8 | 1 | 0 | 0 | 0 | 0 | 0 | 1 | 0 | |
| A+9 | 1 | 0 | 0 | 0 | 0 | 0 | 1 | 0 | |
| A+10 | 0 | 0 | 0 | 0 | 0 | 0 | 0 | 0 | |
| A+11 | 0 | 0 | 0 | 0 | 0 | 0 | 0 | 0 | |
| A+12 | 0 | - | - | - | - | - | - | 0 | |
| A+13 | 0 | - | - | - | - | - | - | 0 | |
| A+14 | 0 | - | - | - | - | - | - | 0 | |
| A+15 | 0 | - | - | - | - | - | - | 0 | |

301                    302

NOT USED

FIG. 3

FIG. 4

FIG. 5

0134423

SCREEN BUFFER DATA
TO/FROM MICROPROCESSOR

FIG. 6
SHEET 1 of 2

0134423

SCREEN BUFFER-
ATTRIBUTES

SCREEN BUFFER- DATA

*FIG. 6*
SHEET 2 of 2

FIG. 7
SHEET 1 of 4

FIG. 7
SHEET 2 of 4

FIG. 7

SHEET 3 of 4

FIG. 7

SHEET 4 of 4

|  | 0 | | 1 | | 2 | | • • • | 65 | | • • • | 127 | |
|---|---|---|---|---|---|---|---|---|---|---|---|---|
| 0 - 127 | 0 | P0.0 | 1 | P1.0 | 2 | P2.0 | | 65 | P65.0 | | 127 | P127.0 |
| 128 - 255 | 0 | P0.1 | 1 | P1.1 | 2 | P2.1 | | 65 | P65.1 | | 127 | P127.1 |
| 256 - 383 | 0 | P0.2 | 1 | P1.2 | 2 | P2.2 | | 65 | P65.2 | | 127 | P127.2 |
| 384 - 511 | 0 | P0.3 | 1 | P1.3 | 2 | P2.3 | | 65 | P65.3 | | 127 | P127.3 |
| 512 - 639 | 0 | P0.4 | | | | | | | | | | |
| 640 - 767 | 0 | P0.5 | | | | | | | | | | |
| 768 - 895 | 0 | P0.6 | | • | | • | | | • | | | • |
| 896 - 1023 | 0 | P0.7 | | • | | • | | | • | | | • |
| 1024 - 1151 | 0 | P0.8 | | • | | • | | | • | | | • |
| 1152 - 1279 | 0 | P0.9 | | | | | | | | | | |
| 1280 - 1407 | 0 | P0.10 | | | | | | | | | | |
| 1408 - 1535 | 0 | P0.11 | | | | | | | | | | |
| 1536 - 1663 | 0 | P0.12 | | | | | | | | | | |
| 1664 - 1791 | 0 | P0.13 | | | | | | | | | | |
| 1792 - 1919 | 0 | P0.14 | | | | | | | | | | |
| 1920 - 2047 | 0 | P0.15 | 1 | P1.15 | 2 | P2.15 | • • • | 65 | P65.15 | • • • | 127 | P127.15 |

*FIG. 8*

| PASS | STARTING ADDRESS | NO. OF SCAN LINES |
|---|---|---|
| 1 | 1920 | 16 |
| 2 | 1792 | 15 |
| 3 | 1664 | 14 |
| 4 | 1536 | 13 |
| 5 | 1408 | 12 |
| 6 | 1280 | 11 |
| 7 | 1152 | 10 |
| 8 | 1024 | 9 |
| 9 | 896 | 8 |
| 10 | 768 | 7 |
| 11 | 640 | 6 |
| 12 | 512 | 5 |
| 13 | 384 | 4 |
| 14 | 256 | 3 |
| 15 | 128 | 2 |
| 16 | 0 | 1 |

FIG. 9